(19) Europäisches Patentamt
European Patent Office
Office européen des brevets

(11) Veröffentlichungsnummer: 0 335 157 A1

(12) EUROPÄISCHE PATENTANMELDUNG

(21) Anmeldenummer: 89104343.2

(22) Anmeldetag: 11.03.89

(51) Int. Cl.4: C08G 73/02 , C08G 69/48 , D21H 3/48 , D06M 15/61

(30) Priorität: 26.03.88 DE 3810425

(43) Veröffentlichungstag der Anmeldung: 04.10.89 Patentblatt 89/40

(84) Benannte Vertragsstaaten: CH DE FR GB LI NL SE

(71) Anmelder: BAYER AG
D-5090 Leverkusen 1 Bayerwerk(DE)

(72) Erfinder: Bachem, Henning, Dr.
Wolfskaul 10
D-5000 Köln 80(DE)
Erfinder: Süling, Carlhans, Dr.
Carl-Leverkus-Strasse 10
D-5068 Odenthal(DE)
Erfinder: Muszik, Janos, Dr.
Gariele-Münter-Strasse 12
D-5090 Leverkusen 1(DE)
Erfinder: Schröer, Wolf-Dieter, Dr.
Hofbrunnstrasse 4
D-8000 München 71(DE)

# (54) Stickstoffhaltige, wasserlösliche polymere Verbindungen.

(57) Wasserlösliche, vernetzbare, polymere Verbindungen, die durch Umsetzung von Halogenhydrin-Gruppen enthaltenden Reaktionsprodukten aus Ammoniak, Mono- oder Polyaminen und Epihalogenhydrin mit anorganischen Basen und anschließende Umsetzung der entstehenden Epoxy-Gruppen enthaltenden Verbindungen mit halogenfreien Sulfonsäuren zu Sulfonsäureester-Gruppen enthaltenden Verbindungen erhältlich sind, werden zur Naßfestausrüstung von Papier verwendet.

EP 0 335 157 A1

## Stickstoffhaltige, wasserlösliche, polymere Verbindungen

Die Erfindung betrifft wasserlösliche, vernetzbare, polymere Verbindungen, die durch Umsetzung von Halogenhydrin-Gruppen enthaltenden Reaktionsprodukten aus Ammoniak, Mono- oder Polyaminen und Epihalogenhydrin mit anorganischen Basen und anschließende Umsetzung der entstehenden Epoxy-Gruppen enthaltenden Verbindungen mit halogenfreien Sulfonsäuren zu Sulfonsäureester-Gruppen enthaltenden Verbindungen erhältlich sind, ihre Herstellung und ihre Verwendung zur Naßfestausrüstung von Papier.

Halogenhydrin-Gruppen enthaltende Umsetzungsprodukte aus Ammoniak oder Mono- oder Polyaminen mit Epichlorhydrin und ihre Verwendung zur Naßfestausrüstung von Papier sind bekannt.

So werden beispielsweise in den deutschen Offenlegungsschriften 22 29 219, 22 57 271, 29 38 588 und 29 49 870, den deutschen Patentschriften 17 20 905, 17 71 043 und 19 06 450, den europäischen Patentanmeldungen 0 131 200 und 0 126 176 und den US-Patentschriften 29 26 154 und 33 32 901 selbstvernetzende, wasserlösliche Reaktionsprodukte aus Epihalogenhydrinen und basischen Polyamidaminen oder Polyaminen bzw. Gemischen hieraus beschrieben, wobei jeweils ein Überschuß an Epihalogenhydrin pro Äquivalent an basischen Aminogruppen verwendet wird.

Aus den deutschen Offenlegungsschriften 15 95 302 und 19 06 561 sind wasserlösliche Kondensationsprodukte aus ε-Caprolactam, Polyaminen, Polyamidaminen und Epichlorhydrin bekannt.

Nach dem Verfahren der deutschen Offenlegungsschrift 20 52 023 werden wasserlösliche, härtbare Harze durch Umsetzung von Epichlorhydrin mit Ammoniak und/oder Polyaminen gewonnen.

Außerdem sind aus der deutschen Offenlegungsschrift 17 70 150 wasserlösliche, kationische Vinylpolymere bekannt, die durch Transamidierung von Polyacrylamid mit Polyaminen und anschließende Umsetzung mit Epichlorhydrin zugänglich sind.

Aus den deutschen Offenlegungsschriften 17 95 416 und 15 46 323 sind wasserlösliche Reaktionsprodukte aus Polyethylenimin und Epichlorhydrin oder Dichlorhydrin bekannt.

Bisher in der Praxis eingesetzte und durch die zitierte Literatur beschriebene vernetzbare Amin-Epihalogenhydrin-Harze werden im allgemeinen hergestellt durch Umsetzungen von 1,0 bis 2,5 Mol Epihalogenhydrin, bezogen auf basischen Stickstoff im Amin. Die Produkte weisen einen hohen Gehalt an Halogenhydrin-Reaktivgruppen auf. Diese sorgen dafür, daß ausreichend reaktive, vernetzungsfähige Produkte erhalten und dadurch die gewünschten Naßfestwerte von Papier erzielt werden.

Bei der Verwendung als Naßfestmittel in der Papierherstellung erfolgt jedoch eine unvollständige Reaktion mit der Cellulosefaser, und nicht umgesetzte Anteile der Produkte gelangen in das Abwasser der Papiermaschinen und tragen zu dessen Belastung mit organisch gebundenem Halogen bei.

Der Erfindung lag nun die Aufgabe zugrunde, lagerfähige kationische Verbindungen zu schaffen, die im neutralen bis alkalischen Milieu vernetzbar und den gebräuchlichen Epihalogenhydrin-Harzen in der Naßfestwirkung vergleichbar sind und deutlich weniger organisch gebundenes, adsorbierbares Halogen enthalten.

Es wurde gefunden, daß durch eine Reaktion von Halogenhydrin-Gruppen-haltigen Verbindungen mit anorganischen Basen und anschließende Umsetzung der entstehenden Epoxy-Gruppen-enthaltenden Verbindungen mit halogenfreien Sulfonsäuren lagerstabile Produkte mit erheblich weniger organisch gebundenem Halogen erhalten werden, die die Naßfestigkeit eines hiermit ausgerüsteten Papiers hervorragend verbessern.

Die erfindungsgemäßen Polymeren enthalten Sulfonsäureestergruppen, die durch Reaktion von Epoxygruppen mit Sulfonsäuren als Substituenten in das Makromolekül eingeführt werden.

Unter Halogenhydrin-Gruppen-haltigen Verbindungen sind Produkte zu verstehen, die durch Umsetzung von Ammoniak oder den genannten Aminen mit Epichlorhydrin im Molverhältnis von 0,8 bis 3,75 Mol Epihalogenhydrin pro Mol basischer Stickstoff erhalten werden.

Die Mono- und Polyamine enthalten mindestens 1 primäre oder sekundäre Aminogruppe. Die Polyamine enthalten ≧ 2 basische Aminogruppen. Sie können außerdem tert.-Amino-, Carbonamid- oder Hydroxy-Gruppen enthalten.

Bevorzugte erfindungsgemäße, wasserlösliche Polymere sind erhältlich durch Umsetzung von

A) einem wasserlöslichen, aliphatischen Polyamin mit primären und/oder sekundären und gegebenenfalls tertiären Amino-, Carbonamid- oder Hydroxy-Gruppen oder Gemischen hieraus mit

B) einem Epihalogenhydrin

und gegebenenfalls anschließende oder gleichzeitige Umsetzung mit weiterem Polyamin A im Molverhältnis von 0,8 bis 3,75 Mol Epihalogenhydrin pro Mol Basenstickstoff der Komponente A und

C) Umsetzung mit einer anorganischen Base im Molverhältnis von 0,2 bis 2,0 Mol Base pro Mol Halogenhydrin-Gruppe
und
D) Umsetzung mit 0,3 bis 10 Mol einer Sulfonsäure, bezogen auf 1 Mol Basenstickstoff der Komponente A, wobei mindestens so viel Sulfonsäure zugesetzt wird, daß ein pH-Wert unter 5 erreicht wird.

Besonders bevorzugte Polymere sind durch Umsetzung von
A.1) einem wasserlöslichen, aliphatischen Polyamin der Formeln

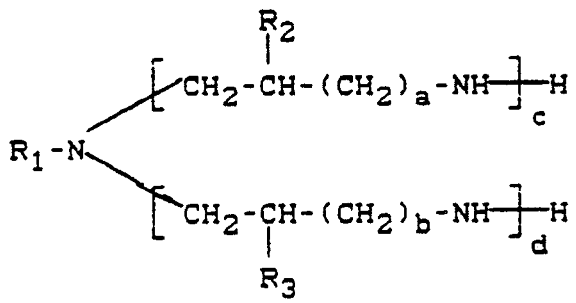
I

oder

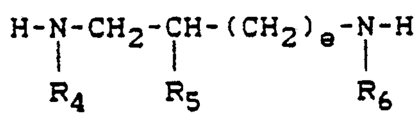
II,

worin
$R_1$, $R_4$ und $R_6$ unabhängig voneinander für Wasserstoff oder einen $C_1$-$C_4$-Alkylrest,
$R_2$, $R_3$ und $R_5$ unabhängig voneinander für Wasserstoff, Methyl oder Ethyl,
a, b und e unabhängig voneinander für eine ganze Zahl von 0 bis 4 und
c und d unabhängig voneinander für eine ganze Zahl von 1 bis 6 stehen,
und/oder
2) einem wasserlöslichen Polyamidamin mit einem Molekulargewicht von mindestens 800, hergestellt aus
α) einem Amin der Formel (I) oder einem Gemisch aus (I) mit bis zu 50 Mol-% eines Amins der Formel (II)
und
β) aliphatischen oder aromatischen Dicarbonsäuren mit 2 bis 12 C-Atomen bzw. deren funktionellen Derivaten, wie Anhydriden, Estern oder Halbestern
und/oder
γ) 3 bis 6 C-Atome enthaltende Aminocarbonsäuren oder deren Lactamen
mit
B. einem Epihalogenhydrin
und gegebenenfalls gleichzeitige oder anschließende Umsetzung mit einem weiteren Polyamin der Formel (I) oder (II)
im Molverhältnis von 0,8 bis 3,75 Mol, bevorzugt 0,9 bis 3,0 Mol, der Komponente B pro Mol Basenstickstoff der Komponente A
und
C. Umsetzung mit einer anorganischen Base im Molverhältnis von 0,2 bis 2,0 Mol, bevorzugt 0,3 bis 1,5 Mol, Base pro Mol Halogenhydrin-Gruppe
und
D. Umsetzung mit 0,3 bis 10 Mol einer Sulfonsäure, bezogen auf 1 Mol Basenstickstoff der Komponenten A, wobei mindestens so viel Sulfonsäure zugesetzt wird, daß saure pH-Werte unter 5, vorzugsweise von 1,5 bis 4,5, erreicht werden,
erhältlich.

Das bevorzugte Molverhältnis von den Aminen 2)α) zu Dicarbonsäuren 2)β) liegt bei 0,8 bis 1,4:1.

Bei Verwendung von wasserlöslichen Polyaminen der allgemeinen Formel (I) als Ausgangsverbindungen werden als Reaktionsprodukte die erfindungsgemäßen Polymeren der allgemeinen Formel

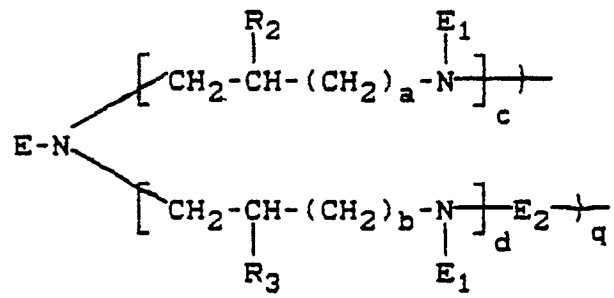

III,

worin

$R_2$, $R_3$, a, b, c und d die in Formel (I) angegebene Bedeutung haben,

q eine Zahl von 5 bis 250,

E und $E_1$ Wasserstoff oder eine Gruppe

$-CH_2-\underset{OH}{\underset{|}{CH}}-CH_2-OSO_3Z$ oder $-CH_2-\underset{OSO_3Z}{\underset{|}{CH}}-CH_2-OH$

E außerdem $C_1$-$C_4$-Alkyl,

$E_2$ eine Gruppe

$-CH_2-\underset{OH}{\underset{|}{CH}}-CH_2-$ oder $-CH_2-\underset{|}{CH}-CH_2-OH$

und

Z Alkyl, Cycloalkyl, Aryl oder Aralkyl bedeuten,

erhalten.

Die bei Z genannten Reste können ihrerseits substituiert sein.

Z steht insbesondere für $C_1$-$C_9$-Alkyl, $C_2$-$C_9$-Hydroxyalkyl, gegebenenfalls durch $C_1$-$C_4$-Alkyl, $C_1$-$C_5$-Alkoxy, Hydroxy oder eine Sulfonsäuregruppe substituiertes Cyclohexyl, Phenyl oder Benzyl.

Bei Verwendung von wasserlöslichen Polyamidaminen, die unter A.2) beschrieben sind und aus den Aminen (I) und aliphatischen Dicarbonsäuren als Ausgangsverbindungen hergestellt werden, werden die erfindungsgemäßen Polymeren der allgemeinen Formel

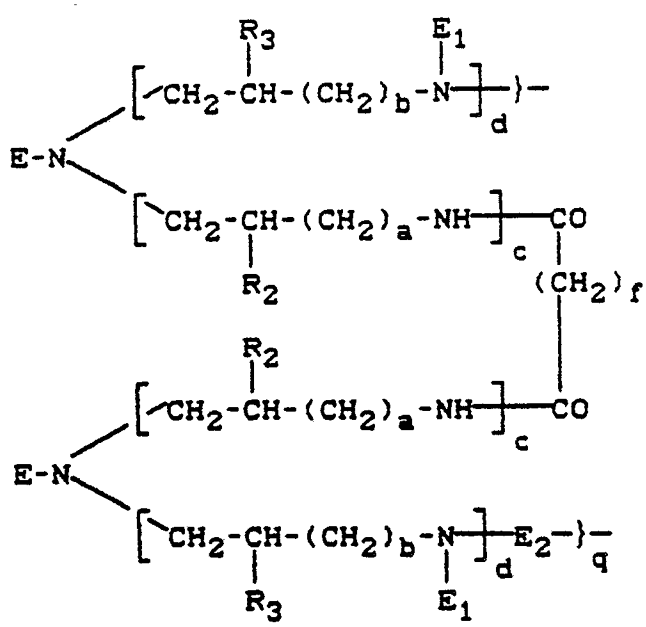

IV,

worin

f für 0 bis 10 steht und die übrigen Symbole die vorstehend genannte Bedeutung haben,

erhalten.

Je nach Molverhältnis von 2α) zu 2β) enthalten die Polyamidamine Amino- oder Carboxyl-Endgruppen.

Bei den zusätzlichen Verwendungen von Diaminen II als Ausgangskomponente enthalten die Polymeren

den Diaminen II entsprechende Amidstrukturen.

Die erfindungsgemäßen Polymeren haben vorzugsweise ein Molekulargewicht von 2.000 bis 100.000.

Bei einem Feststoffgehalt von 5 bis 30 Gew.-%, vorzugsweise 10 bis 25 Gew.-%, weisen die wäßrigen oder die wäßrig-organischen Lösungen der Produkte eine Viskosität von 15 bis 300 mPas, vorzugsweise 20 bis 250 mPas, bei 25 °C auf.

Die Herstellung der erfindungsgemäßen Polymeren erfolgt bevorzugt in wäßrigem Medium. Es können auch andere polare Lösungsmittel wie Ethylenglykol, Diethylenglykol, Triethylenglykol oder Polyethylenglykol, Glycerin, Isopropanol, Methanol, Ethanol, tert.-Butanol, Dimethylformamid oder deren Gemische mit Wasser verwendet werden.

Die Umsetzung der Ausgangskomponenten A und B erfolgt in bekannter Weise. Man rührt hierbei wäßrige, wäßrigorganische oder organische, 10 bis 40 %ige Lösungen der beiden Komponenten bei einer Temperatur von 25 bis 95 °C, vorzugsweise 35 bis 90 °C.

Bereits während der Polykondensation wird dann bei Temperaturen von 25 bis 95 °C, vorzugsweise 20 bis 70 °C und einer Mindestviskosität von 10 mPas, mit Hilfe einer anorganischen Base auf pH-Werte von 8 bis 14, vorzugsweise 8,5 bis 12, eingestellt. Als anorganische Basen seien genannt:

LiOH, $Ca(OH)_2$, $Ba(OH)_2$, $NH_3$, $Na_2CO_3$, $K_2CO_3$, $Na_3PO_4$, $K_3PO_4$, $Sr(OH)_2$, und besonders KOH und NaOH oder Gemische hieraus.

Hierbei kann unter Verbrauch an Base ein Ringschluß der im Polykondensat vorliegenden Halogenhydrin-Gruppen zu Epoxy-Gruppen und gleichzeitige Salzbildung erfolgen.

Unter Beibehalt basischer pH-Werte von 8 bis 14, vorzugsweise 8,5 bis 12, wird das Reaktionsgemisch im Anschluß, gegebenenfalls unter Zugabe von Lösungsmittel, 10 Minuten bis 10 Stunden, bevorzugt 15 Minuten bis 8 Stunden, bei 10 bis 80 °C, vorzugsweise 15 bis 70 °C, gerührt.

Bei dieser Reaktionstemperatur wird anschließend entsprechend dem erfindungsgemäßen Verfahren mit soviel Sulfonsäure versetzt, daß der pH-Wert der Lösung bei pH $\leq$ 5, vorzugsweise 1,0 bis 4,5, liegt.

Bevorzugte Sulfonsäuren haben die Formel

$Z-SO_3H$ V,

worin

Z die vorstehend genannte Bedeutung hat.

Als Beispiele seien genannt:

Hydroxymethansulfonsäure, Hydroxyethansulfonsäure, Cyclohexansulfonsäure und besonders Methansulfonsäure und Alkansulfonsäuregemische, deren Alkanreste 1 bis 6 C-Atome enthalten, Benzylsulfonsäure, die isomeren Dimethylbenzolsulfonsäuren, o-Xylylendisulfonsäuren, Benzol-1,3-disulfonsäure, 4-Hydroxybenzolsulfonsäure, 4-$C_1$-$C_4$-Alkoxysulfonsäuren, 4-Hydroxy-1,3-benzoldisulfonsäure und bevorzugt Benzolsulfonsäure und Toluolsulfonsäure (o, m, p).

Durch Verdünnen mit Wasser oder Lösungsmitteln wird der Feststoffgehalt der fertigen Produkte anschließend auf den anwendungstechnisch gewünschten Gehalt eingestellt.

Als Polyamine (I) seien genannt:

Diethylentriamin, Triethylentetramin, Tetraethylenpentamin, Pentaethylenhexamin, Hexaethylenheptamin, Heptaethylenoctamin, Dipropylentriamin, Tripropylentetramin, Dihexamethylentriamin, Methyl-bis-(3-aminopropyl)-amin, Ethyl-bis-(3-aminopropyl)-amin, 2-Hydroxyethyl-bis-(3-aminopropyl)-amin oder Gemische hieraus.

Als Diamine (II) seien erwähnt:

Ethylendiamin, N-(2-hydroxyethyl)-ethylendiamin, N,N'-Dimethylethylendiamin, 1,2-Diaminopropan, 1,3-Diaminopropan, N-Methyl-1,3-diaminopropan, N,N'-Dimethyl-1,3-diaminopropan, N,N-Dimethyl-1,3-diaminopropan oder Gemische hieraus.

Beispiele für Polyamine (A.2)α) sind bei den Polyaminen (I) und (II) genannt.

Bevorzugt sind:

Ethylendiamin, Diethylentriamin, Triethylentetramin, Tetraethylenpentamin, Pentaethylenhexamin, Hexaethylenheptamin, Dipropylentriamin, Methyl-bis-(3-aminopropyl)-amin bzw. Gemische hieraus.

Bevorzugte Dicarbonsäuren (A.2)β) sind:

Oxalsäure, Bernsteinsäure, Malonsäure, Glutarsäure, Adipinsäure, Sebacinsäure, 1,2-Dodecandisäure, Itaconsäure und Isophthalsäure.

Bevorzugtes Beispiel für B ist Epichlorhydrin.

Entsprechend dem erfindungsgemäßen Verfahren werden unter technisch gut handhabbaren Bedingungen klare, über Monate, vorzugsweise 6 bis 9 Monate, auch bei einem hohen Feststoffgehalt von bis zu 30 Gew.-% lagerstabile, vorzugsweise wäßrige, kationaktive Lösungen erhalten.

Die erfindungsgemäßen Polymeren finden Verwendung als Papierhilfsmittel, vor allem zur Naßfestausrüstung von Papier oder papierähnlichen Materialien, wie Pappe oder Karton. Die Ausrüstung der Papiere

erfolgt dabei in an sich bekannter Weise. Bevorzugt werden die polymeren Verbindungen der wäßrigen Suspension des Papierrohstoffes in der Masse zugesetzt. Diese wird dann zu Papier verarbeitet.

Man setzt, je nach gewünschtem Effekt, dabei 0,5 bis 4,0 Gew.-% (bezogen auf Papierfaserstoff) der erfindungsgemäß hergestellten Polymeren mit einem Wirkstoffgehalt von 10 bis 20 Gew.-%, vorzugsweise als wäßrige Lösung, ein.

Bei besonders hohen Anforderungen an die Naßfestigkeit, wie z.B. bei Laminatpapieren mit hohem Aschegehalt und niedrigem Flächengewicht, können Zusatzmengen von 6 Gew.-% und mehr zum Erreichen der gewünschten Naßverfestigung erforderlich sein.

Die erfindungsgemäßen hergestellten Polymeren unterscheiden sich von bekannten Polyamin-Epihalogenhydrin Umsetzungsprodukten hinsichtlich ihres Gehaltes an organisch gebundenem Halogen und des AOX-Wertes (= adsorbierbares anorganisches Halogen). Im Gegensatz zu den ansonsten - auch bei einer Ansäuerung mit halogenfreien Säuren oder bei im Neutralen stabilen Produkten -üblichen hohen Gehalten an Halogenhydrin-Reaktivgruppen weisen die erfindungsgemäß hergestellten Polymeren einen wesentlich geringeren Gehalt an diesen Reaktivgruppen auf. Dadurch wird der organische Halogengehalt sowie der AOX-Wert der Umsetzungsprodukte um 50 bis 95 %, vorzugsweise 60 bis 90 %, im Vergleich zu den bekannten Polyamin-Epihalogenhydrin-Produkten gesenkt.

Der Ausdruck Molekulargewicht bezieht sich auf das Gewichtsmittel.

Beispiel 1

Zu einer Vorlage aus 395 g einer 50 %igen wäßrigen Lösung eines Polyamidamins der DE-B 1 771 043, Spalte 4, Zeile 4 bis 25, 0,2 g Methyl-bis-(3-amino-propyl)-amin und 750 ml Wasser tropft man unter Rühren bei 30 °C in 30 Min. 97,5 g Epichlorhydrin und rührt 30 Min. bei 35 °C nach.

Anschließend heizt man auf 55 °C auf und fügt nach einer Rührzeit von 80 Min. bei einer Viskosität von ca. 45 mPas 750 ml Wasser zu. Man kühlt gleichzeitig auf 35 °C ab, stellt mittels einer 45 %igen NaOH-Lösung pH:10 ein und rührt bei pH-Konstanz 30 Min. weiter. Danach setzt man nochmals 310 ml Wasser zu und rührt 30 Min. bei pH:10 weiter.

Nun säuert man mittels Methansulfonsäuren auf pH:2,0 an und stellt den Feststoffgehalt durch Verdünnen mit Wasser ein.

| | |
|---|---|
| Feststoffgehalt : | 15,0 Gew.-% |
| Viskosität : | 82 mPas (25 °C) |
| organ. Cl-Gehalt: | 0,39 %. |

Beispiel 2

Man legt 395 g einer 50 %igen wäßrigen Lösung eines Polyamidamins der DE-B 1 771 043, Spalte 4, Zeile 4 bis 25 und 750 ml Wasser vor und tropft bei 30 °C in 30 Min. 97,5 g Epichlorhydrin zu.

Nach einer Nachrührzeit von 30 Min. erwärmt man auf 55 °C, verdünnt nach weiteren 100 Min. mit 750 ml Wasser und kühlt auf 35 °C ab. Mittels einer NaOH-Lösung stellt man nun pH:10 ein und rührt bis zur gewünschten Viskosität weiter.

Nun säuert man durch Zugabe einer Benzolsulfonsäure-Lösung auf pH:2,3 an und stellt den Feststoffgehalt ein.

| | |
|---|---|
| Viskosität : | 77 mPas (25 °C) |
| Feststoffgehalt : | 15,0 Gew.-% |
| organ. Cl-Gehalt: | 0,41 %. |

Beispiel 3

Zu einer Vorlage aus 240 g einer 50 %igen wäßrigen Lösung eines Polyamidamins der DE-B 1 771

043, Spalte 4, Zeile 4 bis 25, und 450 ml Wasser tropft man bei 30° C in 30 Min. 58,5 g Epichlorhydrin und rührt 30 Min. bei 35° C nach.

Anschließend erwärmt man auf 60° C und verdünnt bei steigender Viskosität mit 450 ml Wasser. Man kühlt auf 40° C ab, stellt mittels einer 45 %igen NaOH-Lösung pH:10 ein und rührt bis zur gewünschten Viskosität weiter.

Nun säuert man durch Zugabe einer p-Toluolsulfonsäure-Lösung auf pH:2 an und stellt den Feststoffgehalt entsprechend ein.

| | |
|---|---|
| Viskosität : | 52 mPas (25° C) |
| Feststoffgehalt : | 15,0 Gew.-% |
| organ. Cl-Gehalt: | 0,51 %. |

Beispiel 4

a) Zu einer Vorlage aus 216 g Diethylentriamin setzt man bei Raumtemperatur 292 g Adipinsäure zu; hierbei erwärmt sich das Gemisch auf 125° C. Anschließend heizt man unter Rühren auf eine Innentemperatur von 150° C, rührt 10 Min. am Rückfluß und stellt dann auf Destillatabnahme um.
Innerhalb von 2 Stunden heizt man bis auf 197° C auf, wobei das Reaktionswasser gleichmäßig abdestilliert, kühlt auf 160° C ab und setzt dann langsam 430 ml Wasser zur Schmelze zu. Man rührt noch 1 Stunde bei 80 bis 90° C nach und kühlt ab.

| | |
|---|---|
| Viskosität : | 257 mPas (25° C) |
| Feststoffgehalt : | 50,5 Gew.-% |
| Baseäquivalentgewicht: | 342 |

b) Man legt 171 g eines Vorproduktes gemäß Beispiel 4 a) und 315 ml Wasser vor und tropft bei 30° C 55,5 g Epichlorhydrin zu. Danach erwärmt man langsam auf 55° C und verdünnt bei steigender Viskosität mit 215 ml Wasser. Man kühlt auf 40° C ab, stellt mittels einer 10 %igen LiOH-Lösung pH:10 ein und rührt bis zur gewünschten Viskosität weiter.
Jetzt stellt man den pH-Wert mit Methansulfonsäure auf pH:2,5 und verdünnt durch Zugabe von Wasser.

| | |
|---|---|
| Viskosität : | 46 mPas (25° C) |
| Feststoffgehalt : | 12,5 Gew.-% |
| organ. Cl-Gehalt: | 0,39 %. |

Beispiel 5

a) Zu einer Vorlage aus 324 g Diethylentriamin setzt man 438 g Adipinsäure und 169,5 g ε-Caprolactam unter Rühren zu. Die Temperatur steigt dabei auf etwa 100° C an. Anschließend heizt man in 3 Stunden auf 190° C, wobei das Reaktionswasser gleichmäßig abdestilliert, kühlt auf 150° C ab und setzt 800 ml Wasser zu.
Man rührt noch 1 Stunde bei 80 bis 90° C nach und kühlt ab.

| | |
|---|---|
| Viskosität : | 330 mPas (25° C) |
| Feststoffgehalt : | 51,7 Gew.-% |
| Basenäquivalentgewicht: | 436. |

b) Man legt 174,4 g eines Vorproduktes gemäß Beispiel 5 a) und 250 ml Wasser vor und tropft bei 30 °C 38,0 g Epichlorhydrin zu.
Danach erwärmt man auf 70 °C und verdünnt bei steigender Viskosität mit 250 ml einer 3 %igen wäßrigen $Ba(OH)_2$-Lösung.
Man kühlt auf 40 °C ab und stellt den pH-Wert mit Hilfe einer NaOH-Lösung auf pH:11 ein. Nach weiteren 20 Min. verdünnt man nochmals mit 150 ml Wasser und rührt bis zur gewünschten Viskosität weiter.
Jetzt stellt man den pH-Wert durch Ansäuern mit Methansulfonsäure auf pH:2,0 ein und verdünnt durch Wasserzugabe.

| | |
|---|---|
| Viskosität : | 41 mPas (25 °C) |
| Feststoffgehalt : | 15,0 Gew.-% |
| organ. Cl-Gehalt: | 0,41 %. |

Beispiel 6

a) Zu einer Vorlage aus 412 g Diethylentriamin setzt man 315,4 g Isophthalsäure und 292 g Adipinsäure zu, wobei die Temperatur auf 125 °C ansteigt.
Danach heizt man in 2 1/2 Stunden auf 195 °C auf; hierbei wird das Reaktionswasser kontinuierlich abdestilliert. Jetzt kühlt man auf 150 °C ab und setzt dann 830 ml Wasser zu. Zum Schluß rührt man noch 1 Stunde bei 90 °C nach.

| | |
|---|---|
| Viskosität : | 62 mPas (25 °C) |
| Feststoffgehalt : | 51,6 Gew.-% |
| Basenäquivalentgewicht: | 357. |

b) Zu einer Vorlage von 168,5 g eines Vorproduktes gemäß Beispiel 6 a) und 100 ml Wasser/70 ml Essig säureethylester tropft man bei 30 °C in 15 Min. 46,3 g Epichlorhydrin zu und rührt 30 Min. nach.
Danach erhitzt man das Reaktionsgemisch unter Rühren auf 70 °C und verdünnt bei steigender Viskosität kontinuierlich mit 400 ml Wasser.
Man kühlt schnell auf 40 °C ab, stellt den pH-Wert mittels einer 45 %igen NaOH-Lösung auf pH:10 ein und rührt unter pH-Konstanz bei dieser Temperatur bis zur gewünschten Viskosität weiter.
Durch Ansäuern mit einer Toluolsulfonsäurelösung auf pH:2,0 und Verdünnen mit Essigester wird die Umsetzung abgestoppt.

| | |
|---|---|
| Viskosität : | 62 mPas (25 °C) |
| Feststoffgehalt : | 15,0 Gew.-% |
| organ. Cl-Gehalt: | 0,44 %. |

Beispiel 7

a) Man legt 113 g Diethylentriamin und 60 g Ethylendiamin vor und setzt 292 g Adipinsäure zu; hierbei steigt die Innentemperatur auf 135 °C an. Man erhitzt danach bei 140 bis 150 °C für 30 Minuten am Rückfluß und heizt dann unter Destillatabnahme in 3 Stunden auf 193 °C auf. Jetzt kühlt man auf 160 °C ab und setzt vorsichtig 390 ml Wasser zu. Das zunächst teilweise unlösliche Produkt geht nun langsam in Lösung und wird noch 1 Stunde bei 95 °C nachgerührt.

| | |
|---|---|
| Viskosität : | 395 mPas (25° C) |
| Feststoffgehalt : | 48,9 Gew.-% |
| Basenäquivalentgewicht: | 531. |

b) Zu einer Vorlage von 335 g eines Vorproduktes gemäß Beispiel 7 a) und 568 ml Wasser tropft man bei 25 bis 30° C in 30 Minuten 57,0 g Epichlorhydrin und rührt 30 Min. nach. Danach erhitzt man das Reaktionsgemisch unter Rühren auf 75° C und verdünnt bei steigender Viskosität mit 631 ml Wasser. Gleichzeitig kühlt man auf 50° C ab und stellt mittels einer 45 %igen NaOH-Lösung auf pH:10 ein. Unter pH-Konstanz rührt man dann bis zur gewünschten Viskosität weiter und stellt dann mit einer Methansulfonsäure-Lösung auf pH:2,0 und durch Verdünnen mit Wasser auf den gewünschten Feststoffgehalt ein.

| | |
|---|---|
| Viskosität : | 60 mPas (25° C) |
| Feststoffgehalt : | 15,0 Gew.-% |
| organ. Cl-Gehalt: | 0,17 %. |

Anwendungsbeispiel

Gebleichter Kiefernsulfit-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1 l verdünnt.

2- bzw. 4-Gew.-% des erfindungsgemäßen Produktes (15,0 Gew.-% Feststoff) werden, auf Faserstoff bezogen, in das Becherglas gegeben. Nach einer Rührdauer von 3 Min. werden mit den Inhalten der Bechergläser auf einem Blattbildner (Rapid-Köthen-Gerät) Papierblätter mit einem Flächengewicht von ca. 80 g/m² gebildet. Die Papierblätter werden bei 90° C 6 Min. im Vakuum bei einem Druck von 20 mm/Hg getrocknet und im Trockenschrank noch 15 Min. auf 110° C nacherhitzt.

Aus jedem Papierblatt werden nach der Klimatisierung 5 Prüfstreifen von 1,5 cm Breite ausgeschnitten und 5 Min. in destilliertes Wasser eingetaucht. Danach werden die nassen Streifen in eine Zugprüfmaschine eingespannt und die Naßbruchlasten bestimmt.

Die erhaltenen Ergebnisse sind in der folgenden Tabelle wiedergegeben.

| Beispiele | Naßbruchlast (Newton) Einsatzmenge | |
|---|---|---|
| | 2 % | 4 % |
| 1 | 10,3 | 14,5 |
| 2 | 10,1 | 14,2 |
| 3 | 9,9 | 13,1 |
| 4 b | 10,4 | 15,0 |

**Ansprüche**

1. Wasserlösliche, vernetzbare, polymere Verbindungen, die durch Umsetzung von Halogenhydrin-Gruppen enthaltenden Reaktionsprodukten aus Ammoniak, Mono-oder Polyaminen und Epihalogenhydrin mit anorganischen Basen und anschließende Umsetzung der entstehenden Epoxy-Gruppen enthaltenden Verbindungen mit halogenfreien Sulfonsäuren zu Sulfonsäureester-Gruppen enthaltenden Verbindungen erhältlich sind.

2. Polymere Verbindungen nach Anspruch 1, die durch Umsetzung von

A) einem wasserlöslichen, aliphatischen Polyamin mit primären und/oder sekundären und gegebenenfalls tertiären Amino-, Carbonamid- oder Hydroxy-Gruppen oder Gemischen hieraus

mit

B) einem Epihalogenhydrin
und gegebenenfalls anschließende oder gleichzeitige Umsetzung mit weiterem Polyamin A)
im Molverhältnis von 0,8 bis 3,75 Mol Epihalogenhydrin pro Mol Basenstickstoff der Komponente A und
C) Umsetzung mit einer anorganischen Base im Molverhältnis von 0,2 bis 2,0 Mol Base pro Mol Halogenhydrin-Gruppe
und
D) Umsetzung mit 0,3 bis 10 Mol einer Sulfonsäure, bezogen auf 1 Mol Basenstickstoff der Komponente A, wobei mindestens so viel Sulfonsäure zugesetzt wird, daß pH-Werte unter 5 erreicht werden,
erhältlich sind.

3. Polymere Verbindungen nach Anspruch 1, die durch Umsetzung von
A.1) einem wasserlöslichen Amin der Formeln

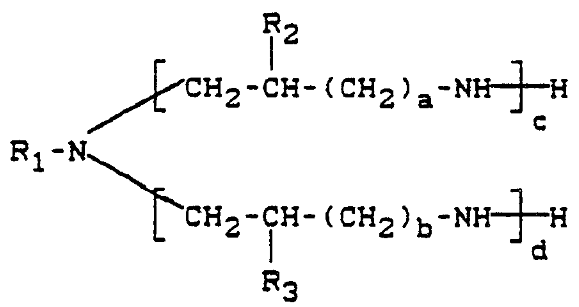

I

oder

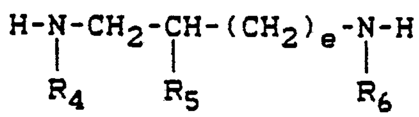

II,

worin
$R_1$, $R_4$ und $R_6$ unabhängig voneinander für Wasserstoff oder einen $C_1$-$C_4$-Alkylrest,
$R_2$, $R_3$ und $R_5$ unabhängig voneinander für Wasserstoff, Methyl oder Ethyl,
a, b und e unabhängig voneinander für eine ganze Zahl von 0 bis 4 und
c und d unabhängig voneinander für eine ganze Zahl von 1 bis 6 stehen,
und/oder
2) einem wasserlöslichen Polyamidamin mit einem Molekulargewicht von mindestens 800, hergestellt aus
α) einem Amin der Formel (I) oder einem Gemisch aus (I) mit bis zu 50 Mol-% eines Amins der Formel (II)
und
β) aliphatischen oder aromatischen Dicarbonsäuren mit 2 bis 12 C-Atomen bzw. deren funktionellen Derivaten, wie Anhydriden, Estern oder Halbestern
und/oder
γ) 3 bis 6 C-Atome enthaltende Aminocarbonsäuren oder deren Lactamen
mit
B. einem Epihalogenhydrin
und gegebenenfalls gleichzeitige oder anschließende Umsetzung mit einem weiteren Amin der Formeln (I) oder (II)
im Molverhältnis von 0,8 bis 3,75 Mol der Komponente B pro Mol Basenstickstoff der Komponente A
und
C. Umsetzung mit einer anorganischen Base im Molverhältnis von 0,2 bis 2,0 Mol Mol, Base pro Mol Halogenhydrin-Gruppe
und
D. Weiterumsetzung mit 0,3 bis 10 Mol einer Sulfonsäure, bezogen auf 1 Mol Basenstickstoff der Komponenten A, wobei mindestens so viel Sulfonsäure zugesetzt wird, daß pH-Werte unter 5 erreicht werden,
erhältlich sind.

4. Polymere Verbindungen nach Anspruch 1, deren 5 bis 30 gew.-%ige wäßrige oder wäßrig-organische Lösungen eine Viskosität von 15 bis 300 mPas bei 25 °C aufweisen.

5. Polymere Verbindungen nach Anspruch 1, bei deren Herstellung als anorganische Basen LiOH, NaOH, KOH, $Sr(OH)_2$, $Ba(OH)_2$, $NH_3$, $Na_2CO_3$ und/oder $Na_3PO_4$ verwendet werden.

6. Polymere Verbindungen nach Anspruch 1, bei deren Herstellung Sulfonsäuren der allgemeinen Formel

$Z\text{-}SO_3H$

verwendet werden, worin

Z für $C_1$-$C_9$-Alkyl, $C_2$-$C_9$-Hydroxyalkyl, gegebenenfalls durch $C_1$-$C_4$-Alkyl, $C_1$-$C_5$-Alkoxy, Hydroxy oder eine Sulfonsäuregruppe substituiertes Cyclohexyl, Phenyl oder Benzyl steht.

7. Polymere Verbindungen nach Anspruch 1 mit einem Molekulargewicht von 2.000 bis 100.000.

8. Verfahren zur Herstellung von wasserlöslichen, vernetzbaren Verbindungen, dadurch gekennzeichnet, daß man Halogenhydrin-Gruppen enthaltende Reaktionsprodukte aus Ammoniak, Mono- oder Polyaminen und Epihalogenhydrin mit anorganischen Basen und anschließend die entstehende Epoxy-Gruppen enthaltende Verbindungen mit halogenfreien Sulfonsäuren umsetzt.

9. Verfahren zur Behandlung von Papierrohstoff, dadurch gekennzeichnet, daß man wasserlösliche, vernetzbare, polymere Verbindungen nach Anspruch 1 verwendet.

10. Naßfestmittel für Papier, dadurch gekennzeichnet, daß sie wasserlösliche, vernetzbare, polymere Verbindungen des Anspruchs 1 enthalten.

Europäisches Patentamt

# EUROPÄISCHER RECHERCHENBERICHT

Nummer der Anmeldung

EP 89 10 4343

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 250 131 (BORDEN)<br>* Ansprüche * | 1-10 | C 08 G 73/02<br>C 08 G 69/48<br>D 21 H 3/48<br>D 06 M 15/61 |
| A,D | DE-A-2 938 588 (SUMITOMO)<br>* Ansprüche 1-10 * | 1-10 | |
| A | GB-A-1 418 302 (SANDOZ)<br>* Ansprüche 1-17 * | 1-10 | |

RECHERCHIERTE SACHGEBIETE (Int. Cl.4)

C 08 G
D 21 H
D 06 M

Der vorliegende Recherchenbericht wurde für alle Patentansprüche erstellt

| Recherchenort | Abschlußdatum der Recherche | Prüfer |
|---|---|---|
| DEN HAAG | 23-06-1989 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)